# EUROPÄISCHE PATENTANMELDUNG

(11) **EP 1 768 436 A2**
(43) Veröffentlichungstag der Anmeldung: **28.03.2007**
(21) Anmeldenummer: 06019464.4
(22) Anmeldetag: 18.09.2006
(51) Int. Cl.: H04Q 7/38, H04Q 7/32

(54) **Vorrichtung zum Steuern eines Senders und/oder Empfängers für Navigations-, Ortungs-, Peilungs-, Informations- und/oder Kommunikationssysteme, sowie Sender und/oder Empfäger hiermit**

(30) Priorität: 21.09.2005 DE 202005015177 U
(71) Anmelder: Herpolsheimer, Klaus, 91207 Lauf/Pegnitz (DE); Herpolsheimer, Wolfgang, 87534 Oberstaufen (DE)
(72) Erfinder: Herpolsheimer, Klaus, 91207 Lauf/Pegnitz (DE); Herpolsheimer, Wolfgang, 87534 Oberstaufen (DE)

(57) **Zusammenfassung**

Die Erfindung betrifft eine Vorrichtung zum Steuern eines Senders und/oder Empfängers, insbesondere eines Mobilteiles, wie eines PDA's, Pocket-PC's, Smartphone, Handys oder eines sonstigen Bedienungsgerätes für Navigations-, Positions-. Ortungs-, Peilungs-, Notruf-, Warn-, Informations- und/oder Kommunikationssysteme aller Art, besonders auch unter Nutzung von Satelliten Radio und/oder Satellitenkommunikation, und unter Verwendung von Übertragungsstandards und Protokollen, wie NanoNet, W-LAN, WiFi. WAP, GSM, GPRS. UMTS. GPS, A-GPS, DGPS, EGNOS, Galileo oder andere. Eine derartige Vorrichtung soll als Sicherheitsmodul "SM" (6) ausgebildet sein und mindesten einen Sicherheitsprozessor (61) als wesentliches Steuerelement und eine implementierte Sicherheitsschrittstelle (62) aufweisen, sowie ggf. einen Energiskontroller (64), ein Handy- und/oder Satelittenradio-System (73) undloder ein Akustiksystem (74), zur Aktivierung, Steuerung und Kontrolle von Sicherheitsmaßnahmen und sicherheitsrelevanter Funktionen und Elemente, besonders auch zur und durch die Nutzung von Satelliten-Kommunikation in beiden Richtungen. Außerdem soll sie mit einem Mobilteil "MT" (1), verbindbar, oder in ein solches einbaubar sein und hiermit und/oder hierüber kommunizieren können, wobei mindestens die wesentlichen Komponenten des Sicherheitsmoduls "SM" (6) auf einer Sicherheitsplatine (60) angeordnet und ggf, in einem eigenen Gehäuse (70) untergebracht sein sollen.

Zudem wird die Verwendung dieser Vorrichtungen "SM", vor allem in und mit Mobilteilen "MT", z.B. in oder mit einem PDA, einem Pocket-PC, einem Smartphone, einem Handy oder einem sonstigen Bedienungsgerät beschrieben, Außerdem werden derartige Mobilteile "MT" selbst, in Verbindung mit den vorgeschlagenen Vorrichtungen, bzw. mit den Sicherheitsmodulen "SM" (6) beansprucht.

## Beschreibung

Die Erfindung betrifft eine Vorrichtung zum Steuern mindestens eines Senders und/oder Empfängers für Navigations-, Ortungs-, Peilungs-, Informations-, Kommunikations-Systeme, als Sicherheits- und/oder Notfall-Systeme, sowie deren Verwendung und hiermit ausgestattete **Sender** und/oder **Empfänger,** die vorzugsweise als **Mobilteile** ausgebildet sind und die dadurch ggf. auch zu zuverlässigen Notfallsystemen, sowie zu individuellen und/oder regionalen Informationssystemen weitergebildet werden können.

Vorrichtungen als Steuergeräte und deren **Verwendung** in Mobilteilen für Kommunikationssysteme, für Navigations-, Positions-, Ortungs-, Peilungs- und/oder Informationssysteme sind bekannt.
Auch solche, die in weitergebildeten Notfall- Warn- und/oder sonstigen Sicherheitssystemen einsetzbar sind und die in stationären Anlagen oder in Mobilteilen verwendet werden können. Ebenso sind auch entsprechende **Sender** und/oder **Empfänger,** insbesondere auch **Mobilteile** in Verbindung mit Navigations-, Positions- und Ortungssystemen und/oder als Alarm-, Notruf- und/oder Warnsysteme bekannt.

Die herkömmlichen Kommunikationssysteme und die bekannten Navigationssysteme arbeiten vorzugsweise mit traditionellen Navigations- und/oder Mobilfunk - Standards. Im Navigationsbereich vor allem auf der Basis von "GPS" = "Global Positionierungs- System", von " "DGPS" "Differentiales Global Positionierungs- System" mit Pseudoliten bzw. mit terestischer Pseudo-GPS-Satelitten-Ortung, A-GPS = Assist Global Positionierungs- System oder auch mit "GNSS" = Global positioning Navigation Satelliten System", "EGNOS" = "European Geostationary Navigation Overlay System", "Galileo®" = "Europaen's own global satellite navigation system inter-operable with GPS & GLONASS" und/oder sonstigen, verfügbaren Systemen. Sie bestehen hauptsächlich aus einem externen Rechner, bzw. einem Kontrollsystem, einem Peilsystem, wie z.B. Peilsatelliten mit Referenzstation(en) und/oder terrestrischen Peilstationen mit Antennenanlagen und/oder Infrarot - Systemen und mindestens einem Mobilteil und ggf. sonstigen Komponenten sowie entsprechender Software.
Die Informations- und Kommunikationssysteme dagegen arbeiten vor allem mit "GSM" = Global System for Mobil Communications. mit "GPRS" = "General Paket Radio Services" und/oder mit GSM und ggf. mit GPRS-Übertragungstechnik für das Informationssystem, insbesondere aber auch in Zukunft ggf. mit "UMTS" = "Universal Mobile Telecommunications Systems".
Mit ® gekennzeichnete Begriffe sind Markennamen der jeweiligen Betreiber-Firmen.
Neben den herkömmlichen Mobilfunk - Standard können aber auch Kurz- oder Langwellen-Amateurfunk oder Rundfunk - Standards oder sogenannte Mini-Funksysteme ebenso Anwendung finden, wie modeme Internet/W@P-Standards, PDA-Multimedia-Card-Standard, SMS, Multimedia, "Voice"₋und ähnliche Übertragungssysteme. Insbesondere auch: "WAP" = "Wireless Application Protocol", "PDA" = "Personal Digital Assistant", "WLAN" (Wireless Local Area Network), "EWAN" (EGNOS Wide Area Network), RIMS (Ranging and Integrity Monitoring Station), "PBCC" (Packet Binary Convolution Coding), "OFDM" (Orthogonal Frequency Division Multiplexing), "WiFi" ( Wireless Fidelity) und/oder "Bluetooth®" = "wireless technology", zur Übertragung großer Datenmengen auf kürzeren Entfernungen zwischen verschiedenen Kommunikationsmitteln, wie z.B. Telefonen, Handys und Computern.

Auch die Verwendung derartiger **Vorrichtungen** als **Steuergeräte** und damit ausgestatteter Sender und/oder **Empfänger,** insbesondere von **Mobilteilen,** im persönlichen und im professionellen Bereich des individuellen Benutzers, auch im Rahmen aktiver Betätigungen in freier Natur, ist bereits bekannt. Ebenso wie deren ggf. anderweitige kommerzielle Nutzungen und/oder strategische Anwendungen.

**Navigationssysteme** sind bisher vor allem als "GPS"- oder "DGPS"- Navigatoren bekannt und werden seit Jahren in der Luftfahrt, in der Wehrtechnik und in der allgemeinen Verkehrstechnik zur Peilung, zur Standortbestimmung und/oder als Ortungs- und Orientierungshilfe verwendet. Zukünftig werden hierzu auch neue Technologien wie "GNSS", "EGNOS" oder "Galileo" eingesetzt.
Diese Techniken sollen nach Bedarf und Verfügbarkeit auch vorschlagsgemäß einsetzbar sein.

In jüngster Zeit finden Navigationssysteme auch verstärkt Anwendung in Kraftfahrzeugen, aber auch in Mobilteilen als sogenannte Routenplaner und Orientierungshilfen. Hierbei werden zusätzlich mit Hilfe digitalisierter Kartenprofile - vorzugsweise auf oder von CD-ROM oder aus Datenbanken - die regionalen Gebietsstrukturen vorgegeben und im Display des Empfängers angezeigt.

In DE 10064978 C1 werden bereits Informations-, Navigations-, Kommunikations- und Notrufsysteme und Mobilteile hierfür offenbart und beschrieben, die als Steuergeräte und als Bedienungselemente für universelle Kommunikations- und Positionierungssysteme für wechselseitigen Datenaustausch und ggf. auch als Notfall-Rettungssysteme geeignet und einsetzbar sind. Sie sind jedoch noch mit herkömmlichen Steuerungen und Programmen, sowie mit relativ aufwändigen und starren Steuereinheiten und mit ggf. anfälligen Energie-Versorgungseinheiten ausgestattet.

Zur Informationsübermittlung und zur Kommunikation gibt es zudem neben einer Vielzahl "normaler" Handys für den mobilen Telefonverkehr bereits "W@P"-fähige Handgeräte in unterschiedlicher Konfiguration und Größe, die auch schon Internet-Anbindungen und - Nutzungen ermöglichen. Zukünftig insbesondere in Verbindung mit der "UMTS" Daten- und Übertragungstechnik.
Handys selbst weisen zwar Sende- und Empfangselemente auf, aber üblicherweise keine Komponenten, mit deren Hilfe Daten und/oder Positionsangaben mittels Peilsystemen einem Navigationssystem zur definierten koordinatenbezogenen Standortbestimmung und/oder zur Orientierungshilfe zugeführt werden können.
Mit den Handys ist somit zwar eine umfassende Kommunikation möglich, meistens aber nicht auch eine einwandfreie und schnelle Positionsbestimmung und/oder eine umfassende Navigationshilfe, insbesondere in der freien Natur.

Aus DE 20308161 U1 sind femer Bedienungselemente für Navigations-, Positions-, Ortungs-, Notruf-, Warn-, Informations- und Kommunikationssysteme bekannt, die ausfallsicher sind und die z.B. bei Stromausfall, Systemabsturz und/oder sonstigen Betriebssystem-Störungen insbesondere als Notfall- und Positionierungssystem weiterhin funktionieren sollen.
Über eine einfache und zweckmäßige konstruktive Gestaltung und Anordnung der Vorrichtungen, bzw. der Notfall relevanten Steuerelemente ist in den bekannten Geräten und Systemen aber nichts ausgeführt.

Insbesondere relativ sichere Notfallsysteme und/oder regionale Informationssysteme, vor allem auch mittels vorhandener, handelsüblicher Sende und/oder Empfangsgeräte, wie z.B. mittels herkömmlicher PDA's, Pocket-PC's, Smartphones, Handy's oder sonstiger Mobilteile, sind durch die bekannten Vorrichtungen und Geräte bisher nicht ausreichend gegeben.

**Aufgabe** der Erfindung ist es daher, eine Vorrichtung, bzw. ein Sicherheitsmodul zu schaffen, sowie damit verbindbare und/oder hiermit ausrüstbare oder bereits ausgestattete Sende- und/oder Empfangsgeräte, insbesondere Mobilteile, vor allem für Informations- und Kommunikations-Systeme, sowie für Navigations-, Ortungs- und/oder Peilungssysteme, zur bevorzugten Verwendung auch und gerade als Notfallsysteme und/oder als individuelle, z.B. auch als regionale, Informationssysteme.

Die Verwendung der Vorrichtung als Sicherheitsmodul soll hierbei insbesondere als Zusatzoder Einbaugerät für Mobilteile möglich sein, die dann verschiedene zusätzliche Funktionalitäten erfüllen können, wobei ggf. mehrere, auch unterschiedliche, Mobilteile hiermit ausgerüstet oder auch ergänzend ausgestattet werden können.

Aufgabe der Erfindung ist es weiterhin, Sende- und/oder Empfangsgeräte, insbesondere **Mobilteile** vorzuschlagen, die mit den dargestellten Vorrichtungen ausgestattet oder verbindbar sind und die dann mit größerer Sicherheit als bisher, besonders auch als Notfallsysteme und/oder als individuelle, bzw. als regionale Informationssysteme in vielen Gebieten, Gegenden und Situationen einsetzbar und vielfältiger nutzbar sind.

Die Verwendung und vorteilhafte Nutzung derartiger ergänzender Steuergeräte in mehreren, bzw. in unterschiedlichen Mobilteilen oder in sonstigen Bedienungselementen, soll vor allem auch im regionalen und/oder im individuellen persönlichen Bereich, in der Luft, zu Wasser oder auf dem Land, auch in Bergregionen und beim Wintersport im Schnee, möglichst umfassend gewährleistet sein, ohne Berücksichtigung der Bewegungsart oder eines speziellen Fortbewegungsmittels.

Die **Lösung** dieser Aufgabe wird mit der im **Anspruch 1** ff vorgeschlagenen Vorrichtung, insbesondere mit deren kennzeichnenden Merkmalen, erfasst und beschrieben und vorschlagsgemäss hiermit ausgestattete **Mobilteile** sind in **Anspruch 23** ff erfasst.

Vorteilhafte **Ausgestaltungen und Weiterbildungen** der vorgeschlagenen Vorrichtung, deren Verwendung und damit ausgestatteter Mobilteile, sind in den jeweils ergänzenden Ansprüchen dargestellt.

Anhand einiger Abbildungen wird die Erfindung nachfolgend beispielhaft dargestellt und näher beschrieben. Hierbei zeigen:
**Figur 1** ein erstes Mobilteil (MT-1), mit eingebautem Sicherheitsmodul (SM-1),
**Figur 2:** eine weiteres Mobilteil (MT-2), mit gestecktem Sicherheitsmodul (SM-2),
**Figur 3:** ein drittes Mobilteil (MT-3), mit aufgesetztem Sicherheitsmodul (SM-3),
**Figur 4:** ein viertes Mobilteil (MT-4), mit angesetztem Sicherheitsmodul (SM-4),
**Figur 5:** ein anderes Mobilteil (MT-5), mit separatem Sicherheitsmodul (SM-5),
**Figur 6 :** ein beispielhaftes Sicherheitsmodul (SM) in schematischer Darstellung.

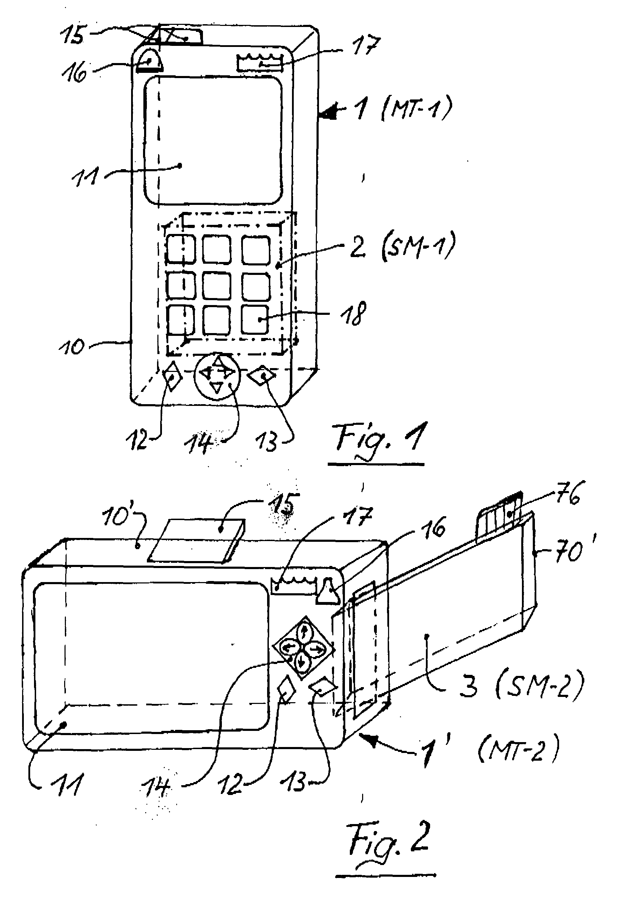

Das in Figur 1 dargestellte erste Mobilteil "MT-1", bzw. 1 enthält ein eingebautes Sicherheitsmodul "SM-1", bzw. 2, das in das Mobilteil 1 eingesetzt, vorzugsweise eingesteckt, montiert ist. Hierbei sind alle Funktionen des durch das Sicherheitsmodul 2 erweiterten Mobilteils 1 über die Bedienungselemente des Mobilteiles 1 zu betätigen und/oder zu steuern, Im Gehäuse 10 ist ein Display bzw. ein Bildschirm 11, ein Einschalter 12, ein separater Ausschalter 13, sowie ein Steuerknopf 14 für die Cursorbewegungen und für sonstige Umschaltungen ebenso enthalten, ebenso wie eine Tastatur 18, mindestens eine Antenne 15, eine Peiltaste 16 und vor allem auch ein Notrufauslöser 17, zur direkten Alarmierung erreichbarer Notrufstationen oder sonstiger System-Partner Die Peiltaste 16 soll hierbei ggf. auch die unmittelbare Positionsbestimmung ermöglichen, die dann im display angezeigt und/oder zusammen mit den Notrufsignalen und einer persönlichen oder Mobilteil spezifischen Identifikations-Kennzeichnung weitergeleitet wird. Bei dieser Ausführung ist das Mobilteil 1 für die Verwendung als Notrufsystem durch die Bauteile 16 und 17 besonders ausgerüstet. Wenn hierauf verzichtet wird, dann können Peilung und Notruf - Auslösung auch durch Bedienungskörper der vorhandenen normalen Tastatur 18 und/oder des Steuerknopfes 14 vorgenommen werden. In diesen Fällen ist lediglich ein freier Platz zur Aufnahme des Sicherheitsmoduls 2, eine geeignete Schnittstelle als Anschluss hierfür und eine entsprechende Programmierung zur Anpassung und Ergänzung beider Geräte aneinander, erforderlich.

Die zugehörigen Betriebssysteme und sonstige, ggf. erforderliche Softwarekomponenten, können in einem der Bauteile 1 oder 2 enthalten sein oder bedarfsweise zugeschalten, bzw. von externen Speicher- und Rechnersystemen herunter geladen werden. Dies gilt auch für - insbesondere regionales - Kartenmaterial und für ggf. benötigte Navigationsprogramme.

Aus **Figur 2** ist ein weiteres Mobilteil "MT-2", bzw. 1', mit angestecktem Sicherheitsmodul "SM-2", bzw. 3, ersichtlich. Das Mobilteil 1' enthält im Gehäuse 10', neben einem Bildschirm 11, ebenfalls einen Einschalter 12, einen Ausschalter 13, einen Steuerknopf 14, sowie eine gesonderte Peiltaste 16 und einen separaten Notruf-Auslöser 17. Das Sicherheitsmodul 3 ist hierbei als Steckkarte ausgebildet und in einen Einsteckschacht, z.B. in einen PCMCIA-Schacht, teilweise eingesetzt mit dem Mobilteil 1' lösbar verbunden. Die Tastaturen 12, 13, 14, 16, 17 des Mobilteils 1' wirken, aktivieren und steuern hierbei vorzugsweise auch die Komponenten des Sicherheitsmoduls 3, sofern an diesem keine eigenen Schaltelemente vorhanden sind.
Am Gehäuse 70' des Sicherheitsmoduls 3 ist mindestens eine zusätzliche Antenne 76, bzw. sind, ggf. einklappbar oder versenkbar, alle notrufrelevanten Antennen (76', 76", 76'", 76"") angeordnet, zur Ergänzung des Mobilteil - Antennensystems 15 oder zur alleinigen Satelliten- und/oder Notfall-Kommunikation, wenn die Antenne(n) 15 des Mobilteils 1' keine oder keine ausreichende Sende- und/oder Empfangsleistung erbringen oder ausschließlich für die Komponenten des Mobilteiles 1' geeignet sind.

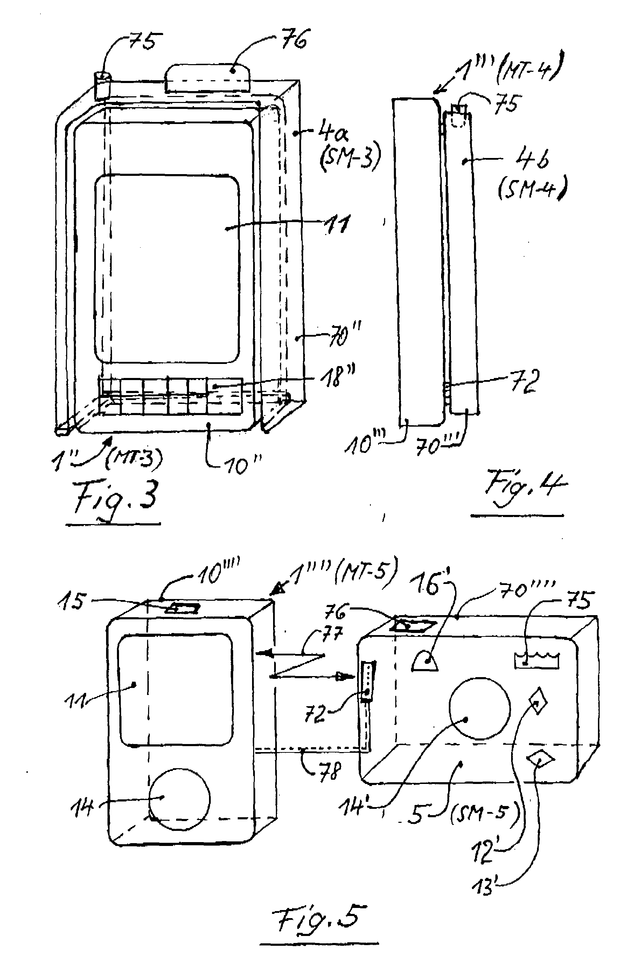

In **Figur 3** ist ein Mobilteil "MT-3", bzw. 1", mit aufgesetztem Sicherheitsmodul "SM-3", bzw. 4a, gezeigt, wobei hier das Mobilteil 1" z.B. ein handelsüblicher Taschen-PC oder ein PDA sein kann und in das hier schalenförmig ausgebildete Gehäuse 70" des Sicherheitsmoduls 4a eingesetzt ist. Da dieses Mobilteil 1" als Handelsware im wesentlichen unverändert verwendet werden soll, enthält das Sicherheitsmodul auch alle zu dessen Bedienung erforderlichen Antennen 76 ff und Bedienungselemente, wie z.B. den Notfallschalter 75.

Zur Anzeige notfallrelevanter Darstellungen oder besonderer individueller und/oder regionaler Informationen, kann auch das Display 11 des Mobilteils 1" verwendet werden, sofern die Schnittstelle beider Geräte entsprechend standardisiert oder individuell angepasst ist. Hinsichtlich der zugehörigen Betriebssysteme und sonstige, ggf. erforderliche Softwarekomponenten, können in einem der Bauteile 1 oder 2 entsprechend ausgestattet sein oder diese Software bedarfsweise zugeschalten, bzw. von externen Speicher- und Rechnersystemen, abrufen. Dies gilt auch für, insbesondere regionales und/oder anderweitig spezielles, Kartenmaterial, sowie für ggf. benötigte Navigationsprogramme.
Zur Softwareanpassung oder -Beschaffung müssen beide Geräte, 1" und 4a, entsprechend ausgestattet sein und/oder zusammenwirken.

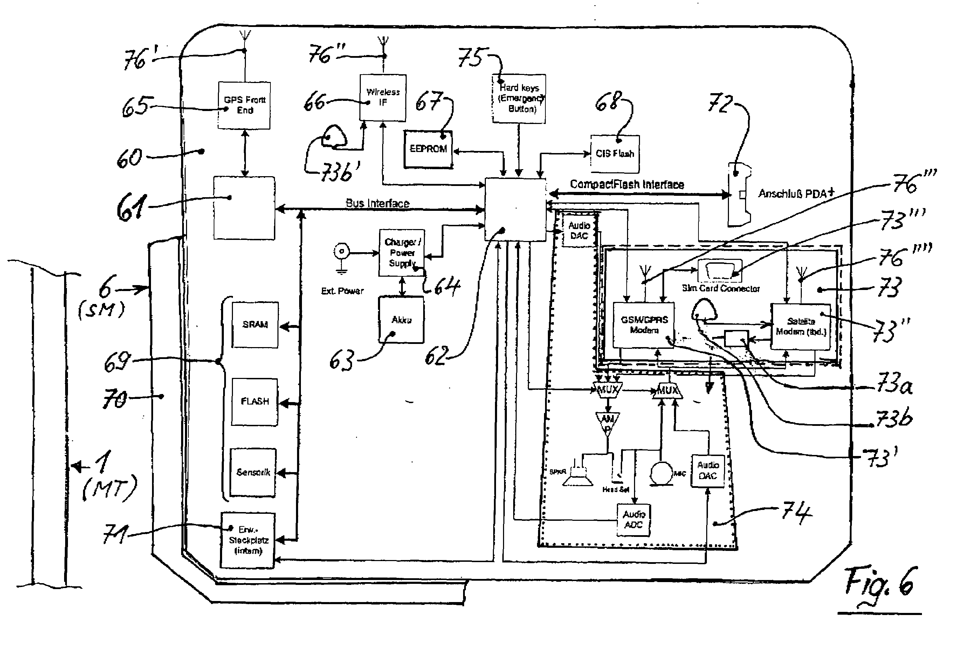

Nach **Figur 4** soll ein viertes Mobilteil "MT-4", bzw. 1"', seitlich dargestellt, am Gehäuse 10'" mit einem plattenförmig gestalteten und haftend, steckbar und/oder schraubbar angesetzten Sicherheitsmodul "SM-4", bzw. 4b, über eine Schnittstelle als Hauptanschluss 72 verbunden sein. Da auch hier ein handelsübliches Grundgerät, z. B. ein Smartphon oder Handy, als Mobilteil 1'" verwendet werden soll, ist mindestens der Notfallschalter 75 dem Sicherheitsmodul 4b direkt zugeordnet. Natürlich können oder müssen auch alle anderen Bedienungsmittel zur Aktivierung, Bedienung und/oder Steuerung der Komponenten des Sicherheitsmoduls 4b an diesem angeordnet sein, wenn hierfür keine Aktivierung und Bedienung über das Mobilteil 1'" selbst möglich ist. Gleiches gilt für die bildliche Darstellung über den Bildschirm des Mobilteiles 1'".

Mit dem in **Figur 5** dargestellten System wird ein Mobilteil "MT-5", bzw. 1"", mit einem separaten Sicherheitsmodul "SM-5", bzw. 5, gezeigt, wobei das Sicherheitsmodul 5, mittels Kabelverbindung 78, z.B. per USB, oder drahtlos 77, z.B. mittels W-LAN, infrarot, Ultraschall, Funk, Bluetooth®", oder sonstiger geeigneter Übertragungstechnik, mit dem Mobilteil 1"" kommuniziert. Am oder im Gehäuse 10'"' des Mobilteils 1"'' sind ein Bildschirm 11, ein Steuerknopf 14 und eine Antenne 15 lediglich beispielhaft gezeigt. Natürlich können hieran auch beliebig andere oder weitere Schalter, Bedienungselemente und/oder Darstellungsmittel vorhanden sein. Das Sicherheitsmodul 5 selbst weist in einem eigenen Gehäuse 70'''' neben dem Hauptanschluss 72 als physikalische Schnittstelle zum Mobilteil 1"", einen eigenen Einschalter 12', einen Ausschalter 13' und einen Steuerknopf 14' auf, sowie eine Peiltaste 16', einen Notfallschalter 75 und Antennen 76, bzw. 76', 76", 76'", 76"", um hierdurch als eigenständige Bedienungs- und Steuereinheit für alle durch das Sicherheitsmodul 5 ermöglichten Zusatzfunktionen und Möglichkeiten einsetzbar zu sein. Bei entsprechendem drahtlosen Verbindungssystem kann so z.B. das Mobilteil 1"" in einer Tasche des Benützers verstaut und geschützt aufbewahrt werden, während das Sicherheitsmodul 5 jederzeit griffbereit, z.B. an einem Band um den Hals getragen werden kann. Erst wenn weitere Einzelheiten über das Mobilteil 1"" abzufragen oder anzuzeigen sind, ist auch dieses Teil erforderlich.

**Figur 6** zeigt beispielhaft ein Sicherheitsmodul "SM", bzw. 6, in schematischer Darstellung. In einem ggf. vorhandenen Gehäuse 70 ist eine Sicherheitsplatine 60, bzw. eine "Compact Flash Card" angeordnet, der alle relevanten Bauteile zugeordnet sind. Vorrangig ist ein Sicherheitsprozessor 61, z.B. ein GPS Baseband Processor und eine implementierte und ggf. programmierbare, Sicherheitsschnittstelle 62 vorhanden, sowie auch ein hiermit verbundener Energiekontroller 64, nebst Akku 63 und einem externen Stromquellenanschlussfür direkte Energiezufuhr und/oder für den Ladestrom zum Aufladen des oder der Akkus 63. Der Sicherheitsprozessor 61 steuert und verbindet das Sicherheitsmodul 6 auch mit einem Navigations- und Positionierungssysten 65, als " GPS/EGNOS-Front End"-Baustein, nebst GPS-Antenne 76'.
Über die Sicherheitsschnittstelle 62 wird neben dem Energiekontroller 64 als "Charger/Power Supply" und über einen "Bus Interface" mit dem Sicherheitsprozessor 61 auch ein Speichersystem 69 verbunden, das insbesondere aus einem SRAM-Speicher, einem Flash und einer besonderen Sensorik besteht, z.B. zur Temperaturmessung und -Steuerung u.ä.. Mit internen Erweiterungs-Steckplätzen 71 ist das System erweiterbar und mittels einem "CompactFlash Interface" zum Hauptanschluss 72 für PDA's oder sonstige Mobilteile 1, als Schnittstelle nach außen, ist das ganze Sicherheitsmodul 6 mit einem geeigneten Mobilteil 1 verbindbar, insbesondere auch per Steckverbindung, per Kabel und/oder drahtlos, z.B. per Funk, W-LAN, Bluetooth®", Infrarot, Ultraschall oder einer sonstigen geeigneten Übertragungstechnik.
Ein "Flash", z.B. ein "CIS Flash" als Konfigurationsdatenspeicher 68 und mindestens ein "EPROM" als Notrufdatenspeicher 67, sind ebenso über die Sicherheitsschnittstelle 62 im Sicherheitsmodul 6 integriert, wie ein "Wireless Interface" als Funksystem 66 mit entsprechender W-LAN-Antenne 76". Zum empfangen und/oder senden per Satelliten-Kommunikation ist ein "Satelliten-Modem", bzw. ein Satelliten-Modul 73" mit einer Satelliten-Kommunikations-Antenne 76"" vorgesehen und für den "normalen" Handbetrieb, ein GSM/GPRS-Modem, mit einer GSM/GPRS-Antenne 76"', bzw. ein GSM/GPRS Modul 73', mit einer GSM/GPRS-Antenne 76"', wobei ein "Slm Card Conector" 73'" die persönliche Identifizierung sicherstellt. Ein Satellitenradio-Empfänger 73a ermöglicht ggf. die aktuelle Nachrichten- und Informationsübermittlung, z.B. auch Wetterberichte, Lawinenwamungen u.ä., von externen Sendern zum Sicherheitsmodul, bzw. zum Mobilteil, bei entsprechender Verkoppelung, Ein Peilsender 73b, 73b' kann u.a. Peilsignale aussenden und ermöglicht dadurch die Ermittlung und/oder Weitergabe des aktuelle Standortes. Die Peilsignale können über das Satelliten-Kommunikations-Modul 73" mit der Satelliten-Kommunikations-Antenne 76"" und/oder über das Funksystem / Wirless Interface 66 und die WLAN-Antenne 76" ausgestrahlt, bzw. gesendet, werden.
Durch ein eingebautes "Akustiksystem 74, mit Lautsprecher(n), Mikrofon, ggf. Kopfhörer-Anschluss und weiteren zugehörigen Komponenten, ist das Sicherheitsmodul 6 auch ohne Mobilteil 1 akustisch ausdrucksfähig und für Tonausgaben, Spracheingaben und Sprachsteuerung nutzbar. Sowohl das Handy-Satelliten-Radio-System 73 als auch das Akustiksystem 74 sind über die Sicherheitsschnittstelle 62 in das Sicherheitsmodul 6 eingebunden und über diese, ggf. nach Bedarf programmierbare Schnittstelle 62 steuerbar und bedarfsweise auswertbar.
Ein derart ausgestattetes Sicherheitsmodul 6 ermöglicht eine optimale Verwendung eines hiermit verbundenen Mobilteiles 1 ff. als Notfallsystem ebenso wie als individuelles und/oder regionales Informationssystem, unter Ausnutzung der jeweils regionalen Gegebenheiten und besonderen Situationen, wenn das System regional, z.B. durch zutreffende Notfall-Ansprechpartner und durch regionale und aktuelle Karten angepasst, bzw. zeitnah aktualisiert worden ist.

Nachfolgend wird die Erfindung ergänzend und detailliert dargestellt.
So wird zunächst eine Vorrichtung vorgeschlagen, zum Steuern eines Senders und/oder Empfängers, insbesondere eines Mobilteiles, wie eines PDA's, Pocket-PC's, Smartphone's, Handy's, PC's, Laptops oder eines sonstigen Bedienungsgerätes für Navigations-, Positions-, Ortungs-, Peilungs-, Notruf-, Warn-, Informations- und/oder Kommunikationssysteme aller Art, besonders auch unter Nutzung von Satellitenradio und/oder Satelliten - Kommunikation und unter Verwendung von Übertragungsstandards und Protokollen, wie NanoNet, W-LAN, WiFi, WAP, GSM, GPRS, UMTS, GPS, A-GPS, DGPS, EGNOS, Galileo oder andere. Eine derartige Vorrichtung soll insbesondere als Sicherheitsmodul "SM", bzw. 6, "SM-1", bzw. 2, "SM-2", bzw. 3, "SM-3", bzw. 4a, "SM-4", bzw. 4b, oder als "SM-5", bzw. 5, ausgebildet sein und mindesten einen Sicherheitsprozessor 61 als wesentliches Steuerelement und eine implementierte Sicherheitsschnittstelle 62, vorzugsweise als programmierbaren Baustein, aufweisen, zur Aktivierung, Steuerung und Kontrolle von Sicherheitsmaßnahmen und sicherheitsrelevanter Funktionen und Elemente, besonders auch zur und durch die Nutzung von Satelliten-Kommunikation in beiden Richtungen. Sie soll hierfür zudem mit einem Sender und/oder Empfänger, insbesondere einem Mobilteil "MT", "MT-1", bzw. 1, "MT-2", bzw. 1', "MT-3", bzw. 1", "MT-4", bzw. 1''', oder "MT-5", bzw. 1"", wie insbesondere einem PDA, Pocket-PC, Smartphone, Handy, Laptop oder einem sonstigen Bedienungsgerät verbindbar sein und/oder kommunizieren können.

Eine derartige Vorrichtung soll zudem vorteilhaft einen oder mehrere Energiekontroller 64, zur Steuerung des "Power-Managements" aufweisen, der mit der Sicherheitsschnittstelle 62 verbunden ist, und ggf. weitere Bauteile, zur Sicherstellung der Satellitenkommunikation und/oder zur Kommunikation mit den Peripherieeinheiten.

Die Vorrichtung soll insgesamt als Baugruppe, bzw. als Sicherheitsmodul "SM", bzw. 6, "SM-1", bzw. 2, "SM-2", bzw.3, "SM-3", bzw. 4a, "SM-4", bzw. 4b, oder "SM-5", bzw. 5 ausgebildet sein und vorzugsweise auf einer "Compact Falsh Card", bzw. auf einer Sicherheitsplatine 60, angeordnet und ggf. in ein Gehäuse 70 eingebettet sein. Außerdem soll sie derart ausgebildet sein, dass sie alle sicherheitsrelevanten Komponenten und Funktionen selbst enthält und/oder auslöst und steuert, wobei sie insbesondere ein hiermit ausgestattetes oder verbundenes Grundgerät, bzw. ein Mobilteil "MT", "MT-1", bzw. 1, "MT-2", bzw. 1', "MT-3", bzw.1", "MT-4", bzw. 1'", "MT-5", bzw. 1"", aktiviert, kontrolliert, steuert und/oder mit verwendet, z.B. zum Bedienen oder zur Daten- oder Bildanzeige.

Eine derartige Vorrichtung ist besonders vorteilhaft, wenn sie als Sicherheitsmodul 2, 3, 4a, 4b, 5 gestaltet und auf einer Sicherheitsplatine 60 modular aufgebaut ist, wobei mehrere Komponenten, ineinander, aufeinander oder nebeneinander angeordnet, direkt gekoppelt, mit Kabeln oder per Funk oder mittels anderer, insbesondere berührungsloser, Übertragungstechnik, miteinander verbunden oder koppelbar verbunden sein sollen.
Nach weiterer Ausgestaltung kann eine solche Vorrichtung vorteilhaft mindestens ein Wireless Interface 66 aufweisen und/oder steuern, als Schnittstelle, insbesondere zum Austausch sicherheitsrelevanter Daten und Informationen mit externen Stationen und/oder Anlagen, sowie ggf. zur Partner-Ortung mit oder ohne Wechsetsprech-Funktion, wie z.B. per Walkie - Talkie - Funkverkehr.

Außerdem soll die Vorrichtung als Sicherheitsprozessor 61 mindestens einen "Satelliten - Navigations - Baseband-Microprocessor", insbesondere einen "GPS/EGNOS-Baseband-Microprocessor" zur Navigationssteuerung aufweisen, sowie weitere "Satelliten - Navigations-Module" 65, Satelliten-Kommunlkations-Module 73", und/oder auch ein GSM/GPRS-Modul 73', soweit derartige Module nicht bereits im Mobilteil 1 ff vorhanden sind und von dem Sicherheitsmodul "SM" mit genutzt werden können.

Zur Kommunikation mit dem vorgesehen Mobilteil "MT" soll der Sicherheitsprozessor 61 der vorgeschlagenen Vorrichtung, bzw. des Sicherheitsmodul's "SM", Elemente enthalten, zur Kontrolle und Steuerung der Kommunikation mit mindestens einem der vorhandenen oder extern anzusprechenden Betriebssysteme, wie z.B. mit "Windows CE", "Windows CE TAPI", Windows Mobile, "Symbian OS", "Java", "Linux" und/oder einem anderen für derartige Kommunikationen und Bearbeitungen geeigneten Betriebssystem.

Außerdem oder alternativ soll die Vorrichtung, bzw. das Sicherheitsmodul "SM", bzw. dessen Sicherheitsprozessar 61, Elemente und Vorrichtungen enthalten, zur Kontrolle und Steuerung der Verbindungen mit mindestens einem der Kommunikationssysteme GSM, GPRS, UMTS, und/oder mit einem anderen derartigen oder vergleichbaren System.

Zur Herstellung der Verbindungen und/oder zur Verbesserung derartiger Verbindungen des Mobilteiles "MT" soll das Sicherheitsmodul "SM" insbesondere auch eigene Antennen 76, bzw. 76', 76", 76"', 76"", ein GSM-, GPRS- Modem 73', ein UMTS-Modem und/oder ein Satelliten-Kommunikations-Modem 73" enthalten, steuern und/oder deren Signale mit geeigneten Elementen aufnehmen und verarbeiten können, ggf. auch zum Senden von Notrufen über Kommunikationsfrequenzen, ggf. auch über Radiofrequenzen.
Weiterhin sind vorteilhaft auch weitere Elemente und Vorrichtungen enthalten, wie z.B. ein Peilsender 73b, 73b', zum ausgeben eines Peilsignals und/oder ein Satellitenradio-Empfänger 73a, zum Empfang per Satellitenradio, insbesondere auch zum Empfang und Verarbeiten von aktuellen Warnungen, Wettermeldungen oder wichtiger Informationen.

Besonders wichtig ist es, dass die Vorrichtung Elemente und Vorrichtungen 65, 76', 66, 76", 73', 76'", 73", 76 enthält oder steuert, zum Empfangen und/oder Versenden von Notrufsignalen, von regionalen Informationen und/oder zur Ermittlung eigener Standortpositionen und deren Weitergabe, wobei die Signale, Werte und Daten sowohl über GSM, GPRS-Bauteile 73' oder solche für UMTS, als auch über Satelliten-Kommunikations-Module 73" beidseitig, GPS-Komponenten 65, 76' und/oder über WLAN-Elemente 66, 76" abgesetzt und/oder empfangen werden können.

Wenn die Vorrichtung als Sicherheitsmodul "SM-1", bzw. 2, derart gestaltet und ausgeführt ist, dass sie vorzugsweise modular aufgebaut ist und in ein Grundgerät, z.B. in ein Mobilteil "MT-1", bzw. 1, wie beispielhaft in Figur 1 gezeigt, oder in ein sonstiges Bedienungsgerät für ein Navigations-, Positions-, Ortungs-, Peilungs-, Notruf-, Warn- Informations- und/oder Kommunikationssystems einsetzbar, vorzugsweise einsteckbar, ist, dann kann sich hiermit ein besonders kleines und handliches Notruf- und Informationssystem ergeben. Bedingung hierfür ist aber, dass das Mobilteil 1 geeigneten Platz und passende Anschlüsse für das Sicherheitsmodul 2 innerhalb seines Gehäuses aufweist.

Alternativ hierzu kann aber eine vorschlagsgemäße Vorrichtung besonders vorteilhaft als Sicherheitsmodul "SM" ausgebildet und mit einem Gehäuse 70', 70'', 70"', 70"" versehen sein und als lösbares Zusatzgerät, bzw. als selbständiges Bauteil mit einem Grundgerät, bzw. mit einem Mobilteil "MT", bzw. 1', 1", 1"', 1"", oder mit einem sonstigen Bedienungsgerät für ein Navigations-, Positions-, Ortungs-, Notruf-, Warn- Informations- und/oder Kommunikationssystem, vorzugsweise mechanisch, lösbar verbunden sein und mit diesem Bedienungsgerät, bzw. mit dem Mobilteil "MT" im Betriebszustand dann eine kompakte Baueinheit, insbesondere als mobile Notruf-, Informations- und/oder Kommunikationseinheit bilden. Siehe hierzu auch die Figuren 2 bis 4.
Als weitere vorteilhafte Alternative kann eine vorgeschlagene Vorrichtung mit mindestens einem Grundgerät, bzw. mit einem Mobilteil 1, 1', 1", 1'", 1"" als Bedienungsgerät für ein Navigations-, Positions-, Ortungs-, Notruf-, Warn- Informations- und/oder Kommunikationssysteme, mittels Kabel oder drahtlos, verbunden bzw. verbindbar sein und mit diesem im Betriebszustand eine lose, ggf. mehrteilige, Baugruppe, vorzugsweise als Mobilteil-Kombination, z.B. als Mobilteil "MT-5", bzw. 1"" mit dem Sicherheitsmodul "SM-5", bzw. 5, bilden, wie z.B. in Figur 5 gezeigt.
Wichtig ist es auch, dass eine vorgeschlagene Vorrichtung als Sicherheitsmodul "SM" neben dem Sicherheitsprozessor 61 und einer Sicherheitsschnittstelle 62 auch einen Energiekontroller 64 und/oder sonstige Elemente und Vorrichtungen enthält oder steuert, zur Kontrolle und Steuerung der eigenen Energieversorgung und zum "Power Management". Batterien und/oder mindestens ein aufladbarer Akku 63 als eigene Energiequelle und vorzugsweise auch einen Anschluss für externe Energiezufuhr, bzw. für Ladestrom sind ebenfalls wichtige Komponenten.

Der Sicherheitsprozessor 61 der vorgeschlagenen Vorrichtungen soll vorzugsweise ein "Satelliten - Navigations - Baseband-Microprocessor", insbesondere einen "GPS-Baseband-Microprocessor", bzw. ein GPS/EGNOS-Chip sein und/oder innerhalb eines oder auf einem GPS/EGNOS-Chip-Sets, dem GPS-Frot-End 65, bzw. einem entsprechenden Microchip, angeordnet sein.
Zur Mobilfunk-Kommunikation soll die Vorrichtung ein GSM/GPRS-Modul 73' und zur Satelliten-Kommunikation bevorzugt einen, ggf. programmierbaren "Ultra Low Power GPS/EGNOS-Prozessor" 61, bzw. einen vergleichbaren Microprozessor enthalten.

Es wir vorgeschlagen, die beschriebenen Vorrichtungen, bzw. die Sicherheitsmodule "SM", bzw. 2, 3, 4a, 4b, 5 und 6 als ergänzende Bauteile, bzw. als zusätzliche Steuergeräte zur Navigation, Positionsbestimmung, Ortung, sowie besonders als Notruf-, Warn- Informations- und/oder als ergänzende Kommunikationskomponente, zu verwenden und vorzugsweise einem Sender und/oder Empfänger, insbesondere einem Mobilteil "MT", bzw. 1, 1', 1", 1"', 1"", für Navigations-, Ortungs-, Informations- und/oder Kommunikationssysteme, dauerhaft oder bedarfsweise zuzuordnen.
Vorzugsweise soll hierbei eine derartig Vorrichtung, bzw. ein entsprechendes Sicherheitsmodul 2, bzw. 6, in einen Sender und/oder Empfänger, insbesondere in ein Mobilteil 1 oder in ein sonstiges Bedienungsgerät für Navigations-, Positions-, Ortungs-, Notruf-, Warn- Informations- und/oder Kommunikationssysteme eingebaut, vorzugsweise steckbar eingesetzt, werden, oder als Zusatzgerät 2, 3, 4a, 4b oder 5, 6, an ein Mobilteil 1', 1", 1'", 1"" angesteckt oder anderweitig angeschlossen werden.

Beansprucht werden somit auch Mobilteile "MT", bzw. 1, 1', 1", 1''', 1"", oder sonstige, vorzugsweise mobile, Bedienungselemente für Navigations-, Positions-, Ortungs-, Notruf-, Warn- Informations- und/oder Kommunikationssysteme, zusammen mit den dargestellten Sicherheitsmodulen 2, 3, 4a, 4b, 5, 6, wobei diese Sicherheitsmodule als Zusatzgeräte in das jeweilige Mobilteil 1, 1', 1", 1"', 1"" fest eingesetzt oder lösbar mit diesem verbunden sind.
Ein solches Mobilteil oder ein sonstiges Bedienungsgerät für Navigations-, Positions-, Ortungs-, Notruf-, Warn- lnformations- und/oder Kommunikationssysteme aller Art, soll vorzugsweise eine vorgeschlagene Vorrichtung aufweisen oder mit einer solchen verbindbar sein, die als Sicherheitsmodul 2, 3, 4a, 4b, 5, 6 ausgebildet ist und mindesten einen Sicherheitsprozessor 61 und eine implementierte Sicherheitsschnittstelle 62 aufweist, womit die sicherheitsrelevanten Komponenten und Funktionen mindestens aktiviert, kontrolliert und gesteuert werden können.

Ein vorschlagsgemäßes Mobilteil "MT", bzw. 1, 1', 1", 1'", 1"" soll, ebenso wie das hiermit verbindbare Sicherheitsmodul 2, 3, 4a, 4b, 5 6, bzw. das dieses enthaltende Zusatzgerät, Mittel aufweisen, zur nachträglichen Verbindung beider Geräte miteinander.

In kompaktester Form kann das Sicherheitsmodul 2, bzw. das Zusatzgerät im Mobilteil 1 integriert angeordnet und bedarfsweise lösbar mit diesem verbunden sein.

Alternativ kann aber ein erfindungsgemäßes Mobilteil 1"", das als Bedienungsgerät für Navigations-, Positions-, Ortungs-, Notruf-, Warn- Informations- und/oder Kommunikationssysteme ausgebildet ist, mit einem passenden Sicherheitsmodul 5 drahtlos, vorzugsweise durch Funk, Ultraschall oder durch Infrarot, oder mittels Kabel, z.B. per USB-Kontakten und Leitungen, miteinander verbunden sein.

Von besonderem Vorteil ist es, wenn das Mobilteil 1, 1', 1", 1'", 1"" als Grundgerät ein PDA, ein Pocket PC, ein Smart Phone oder ein Mobiltelephon, bzw. Handy ist, oder auch ein stationärer PC oder ein tragbares Laptop ist, und wenn das Sicherheitsmodul 2, 3, 4a, 4b, 5, 6, als Zusatzgerät ausgebildet ist und die relevanten Notruf-Elemente und ggf. weitere Bauteile enthält und wenn beide Geräte lösbar oder starr miteinander verbunden, bzw. verbindbar sind, zu einem einheitlichen Bedienungsgerät für ein Sicherheitssystem, bzw. für ein Navigations-, Positions-, Ortungs-, Notruf-, Warn- Informations- und/oder Kommunikationssystem, insbesondere zur Aktivierung und Steuerung von Satelliten-Radio, z.B. für Wetter-, Lawinen- oder sonstige Warnungen. Hierbei sollen verschiedene Übertragungsstandards und Protokolle, wie NanoNet, W-Lan, WiFi, W-Mix, WAP, GSM, GPRS, UMTS, GPS, A-GPS, DGPS, EGNOS, Galileo und andere manuell und/oder automatisch ermöglicht werden und nutzbar sein, um hiermit die Aufnahme und die Wiedergabe universell zu gestaltet und somit für bestimmte oder für verschiedene Geräte (typen), wie PDA / Pocket PC, Smart Phone (etc.), Handys, Laptops, PC's geeignet zu sein.

Grundsätzlich sind hierfür Geräte verschiedenster Hersteller und mit verschiedenen Technologien einsetzbar, wenn die verwendeten Module, Programme und Anschlüsse harmonieren und/oder aneinander angepasst werden können.
Vorschlagsgemäße Vorrichtungen, bzw. Sicherheitsmodule "SM" sollen alle sicherheitsrelevanten Funktionen und Elemente kontrollieren, steuern und aktivieren, damit präventive und/oder aktuelle Sicherheitsmaßnahmen gewährleistet werden, insbesondere auch durch die Nutzung von Satelliten Kommunikation in beiden Richtungen.

Erfindungsgemäße Bedienungselemente, bzw. Mobilteile "MT", oder bedarfsweise auch stationäre oder mobile PC's, z.B. Laptops, und dazu passende Sicherheitsmodule "SM" können, je nach verfügbaren bzw. erhältlichen Bauteilen, grundsätzlich mit jeder Übertragungstechnik und für jeden Kommunikations- und Navigationsbereich verwendet werden. GPS/EGNOS, GSM, Navigation, Position, Peilung und Ortung stehen hierbei ebenso wie Information und Kommunikation synonym und gleichbedeutend für alle hiermit verbundenen Techniken, Anwendungen und/oder Einsatzgebiete.
Ebenso steht "Bedienungselement" für jede Art von Bedienungseinheiten für die angesprochenen Navigations-, Positions-, Ortungs-, Peilungs-, Informations- und/oder Kommunikations- Systeme. Insbesondere auch und gerade für Mobilteile aller Art, für Handy's, Hand-Helds, Pocket-PC's, PDA's, aber auch für Laptop's und/oder stationäre PC's u.ä. Diese Bedienungselemente, bzw. insbesondere die Mobilteile, können jeweils Eigentum des Benützers sein, oder auch Leihgut, z.B. eines Touristikverbandes, einer Gemeinde oder eines sonstigen kommunalen oder privaten Touristik-Trägers oder eines sonstigen System-Betreibers.
Laptop's oder, ggf. auch stationäre, PC's können vor allem dann als Bedienungsgeräte in Betracht kommen, wenn diese Einheiten nicht selbst, z.B. am Körper, getragen werden müssen, sondern wenn sie z.B. in Fahrzeugen oder auch in Gebäuden angeordnet sind oder mit anderen Hilfsmittel transportiert werden (können).

### Positionen:

- **1,1',1",1'",1""**: Mobilteil / Grundgerät (z.B.: MT-1, MT-2, MT-3, MT-4, MT-5),
- **10, 10', 10", 10'", 10""**: Gehäuse (von 1),
- **11**: Bildschirm / Display (von 1),
- **12, 12'**: Einschalter,
- **13, 13'**: Ausschalter,
- **14, 14'**: Steuerknopf für Cursorbewegungen, Programm-Umschaltungen
und Eingabeeinheit (z.B. per Display) für Zahlen, Buchstaben, Funktionen usw.,
- **15**: Antenne(n), ggf. einklappbar od. versenkbar, GPS/EGNOS-Antenne, GSM-Antenne
- **16, 16'**: Peiltaste(n) (optional) an (1 ff) und/oder an (70 ff),
- **17**: Notruf-Auslöser (optional an 1 ff), aktiviert ggf. auch das Sicherheitsmodul (SM-1),
- **18, 18"**: Tastatur (an 1 ff),
- **2**: erstes Sicherheitsmodul (SM-1), als Chipsatz in (1) eingebaut oder einbaubar,
- **3**: zweites Sicherheitsmodul (SM-2), als Steckkarte (z.B. PCMCIA) in oder an (1') steckbar,
- **4a**: drittes Sicherheitsmodul (SM-3), als Steckschale an (1") ansetzbar,
- **4b**: viertes Sicherheitsmodul (SM-4), als Steckplatte an (1"') ansetzbar,
- **5**: fünftes Sicherheitsmodul (SM-5) als externes Modul mit (1"") verbindbar,
- **6**: Sicherheitsmodul (SM), mit sicherheitsrelevanten Bauteilen, bes für den Notfallbetrieb,
- **60**: Sicherheitsplatine, Zusatzgerät-Trägereinheit /Grundplatte,
- **61**: Sicherheitsprozessor / GPS Baseband Prozessor (für die in (1ff) fehlenden Features),
- **62**: Sicherheitsschnittstelle, implementiert / Multiplexer / CompactFlash + Interface,
- **63**: Stromversorgung (SV), eigene SV, bzw. SM-inteme Batterien, Akkus, u.ä.,
- **64**: Energiekontroller (AC/DC-Charger),
- **65**: Navigations- und Positionierungssystem / GPS Front End mit aktiver Antenne,
- **66**: Funksystem / Wiriess-Interface,
- **67**: Notrufdatenspeicher,
- **68**: Konfigurationsdatenspeicher / CIS Flash,
- **69**: Speicher-Subsystem, / SRAM / FLASH mit Sensorik,
- **70, 70', 70", 70'", 70""**: Gehäuse od. Rahmen, ggf. für (60), bzw. von (3, 4a, 4b, 5),
- **71**: Erweiterungs-Steckplätze, bes. für SM-interne optionale Ergänzungen,
- **72**: Hauptanschluss, Verbindung, Schnittstelle für PDA, PC, Smartphone, Handy, PC u.ä.,
- **73**: Handy- und Satelliten-Kommunikations-System, mit Identifikation (ggf. per SIM-Card),
- **73a**: Satellitenradio-Empfänger
- **73b**: Peilsender (in/bei/über 73 und 76""),
- **73b'**: Peilsender (in/bei/über 66 und 76"),
- **73'**: GSM/GPRS-Modul, z.B. für PDA- oder Handy-Kommunikation,
- **73"**: Satelliten-Modul, z.B. für Satelliten- und/oder Satellitenradio-Kommunikation,
- **73'"**: Slm-Card Connector,
- **74**: Akustiksystem / Audio-Subsystem, bes. für Spracheingabe & Sprachausgabe,
- **75**: Notfallschalter und ggf. weitere Bedienungselemente (für 2, 3, 4a, 4b, 5),
- **76**: Antennen (A),
- **76'**: GPS-Antenne,
- **76"**: WLAN-Antenne,
- **76'"**: GSM/GRPS-Antenne,
- **76""**: Satelliten-Kommunikations-Antenne.
- **77**: drahtlose Verbindung, z.B. per Infrarot (IR), Funk, W-LAN u.s.w.
- **78**: Kabelverbindung a.A., z.B. USB od.ä.

## Patentansprüche

1. Vorrichtung zum Steuern eines Senders und/oder Empfängers, insbesondere eines Mobilteiles, wie eines PDA's, Pocket-PC's, Smartphone, Handys oder eines sonstigen Bedienungsgerätes für Navigations-, Positions-, Ortungs-, Peilungs-, Notruf-, Warn-, Informations- und/oder Kommunikationssysteme aller Art, besonders auch unter Nutzung von Satellitenradio und unter Verwendung von Übertragungsstandards und Protokollen, wie NanoNet, W-LAN, WiFi, WAP, GSM, GPRS, UMTS, GPS, A-GPS, DGPS, EGNOS. Galileo oder andere, **dadurch gekennzeichnet, dass** sie als Sicherheitsmodul "SM" (6), SM-1 (2), SM-2 (3), SM-3" (4a), "SM-4" (4b), "SM-5" (5) ausgebildet ist und mindesten einen Sicherheitsprozessor (61) als wesentliches Steuerelement und eine implementierte Sicherheitsschnittstelle (62), vorzugsweise als programmierbaren Baustein, aufweist, zur Aktivierung, Steuerung und Kontrolle von Sicherheitsmaßnahmen und sicherheitsrelevanter Funktionen und Elemente, besonders auch zur und durch die Nutzung von Satelliten-Kommunikation in beiden Richtungen und dass sie mit einem Sender und/oder Empfänger, insbesondere einem Mobilteil "MT", "MT-1" (1), "MT-2" (1'), "MT-3" (1"), "MT -4" (1"'), "MT-5" (1""), wie insbesondere einem PDA, Pocket-PC, Smartphone, Handy oder einem PC, Laptop oder sonstigen Bedienungsgerät, verbunden werden und kommunizieren kann.

2. Vorrichtung nach Anspruch 1, **dadurch gekennzeichnet,**
**dass** sie einen oder mehrere Energiekontroller (64), zur Steuerung des "Power-Managements" aufweist, der mit der Sicherheitsschnittstelle (62) verbunden ist, und **dass** sie ggf. weitere Bauteile, zur Sicherstellung der Satellitenkommunikation und/oder zur Kommunikation mit den Peripherieeinheiten enthält.

3. Vorrichtung nach Anspruch 1 oder 2, **dadurch gekennzeichnet,**
**dass** sie als Baugruppe, bzw. als Sicherheitsmodul "SM" (6), "SM-1" (2), "SM-2" (3), "SM-3" (4a), "SM-4" (4b), "SM-5" (5) ausgebildet ist und vorzugsweise auf einer "Compact Flash Card" als Sicherheitsplatine (60) angeordnet und ggf. in einem Gehäuse (70) eingebettet ist, und dass sie derart ausgebildet ist, dass sie alle sicherheitsrelevanten Komponenten und Funktionen selbst enthält und/oder auslöst und steuert, wobei sie insbesondere ein hiermit ausgestattetes oder verbundenes Grundgerät, bzw. ein Mobilteil "MT", "MT-1 "(1), "MT-2" (1'), "MT-3" (1"), "MT-4" (1'"), "MT-5" (1""), aktiviert, kontrolliert, steuert und/oder (mit) verwendet.

4. Vorrichtung nach einem der vorhergehenden Ansprüche, **dadurch gekennzeichnet, dass** sie als Sicherheitsmodul (2, 3, 4a, 4b, 5) gestaltet ist und auf einer Sicherheitsplatine (60) modular aufgebaut ist und dass hierbei mehrere Komponenten, ineinander, aufeinander oder nebeneinander angeordnet, direkt gekoppelt, mit Kabeln oder per Funk oder mittels anderer, insbesondere berührungsloser, Übertragungstechnik, miteinander verbunden oder koppelbar sind.

5. Vorrichtung nach einem der vorhergehenden Ansprüche, **dadurch gekennzeichnet, dass** sie mindestens ein Wireless Interface (66) aufweist und/oder steuert, als Schnittstelle, insbesondere zum Austausch sicherheitsrelevanter Daten und Informationen mit externen Stationen und/oder Anlagen, sowie ggf. zur Partner-Ortung mit oder ohne Wechselsprech-Funktion, wie z,B. per Walkie-talkie - Funkverkehr.

6. Vorrichtung nach einem der vorhergehenden Ansprüche, **dadurch gekennzeichnet, dass** sie als Sicherheitsprozessor (61) ggf. programmierbar ist und mindestens einen "Satelliten - Navigations - Baseband-Microprocessor", insbesondere einen "GPS/EGNOS-Baseband-Microprocessor" zur Navigationssteuerung aufweist, sowie weitere "Satelliten - Module"(65), Satellitenradio-Kommuikations-Module (73"), und/oder auch ein GSM/GPRS-Modul (73').

7. Vorrichtung nach einem der vorhergehenden Ansprüche, **dadurch gekennzeichnet, dass** der Sicherheitsprozessor (61) ggf. programmierbar ist und Elemente enthält, zur Kontrolle und Steuerung der Kommunikation mit mindestens einem der vorhandenen oder extern anzusprechenden Betriebssysteme, wie z.B. mit "Windows CE", "Windows CE TAPI" und/oder Windows Mobile.

8. Vorrichtung nach einem der vorhergehenden Ansprüche, **dadurch gekennzeichnet, dass** der Sicherheitsprozessor (61) ggf. programmierbar ist und Elemente und Vorrichtungen enthält, zur Kontrolle und Steuerung der Kommunikation mit mindestens einem der Betriebssysteme: "Symbian OS", "Java" und/oder "Linux".

9. Vorrichtung nach einem der vorhergehenden Ansprüche, **dadurch gekennzeichnet, dass** der Sicherheitsprozessor (61), Elemente und Vorrichtungen enthält, zur Kontrolle und Steuerung der Verbindung mit den Kommunikationssystemen GSM, GPRS, UMTS.

10. Vorrichtung nach einem der vorhergehenden Ansprüche, **dadurch gekennzeichnet, dass** sie Antennen (76, bzw. 76', 76", 76"', 76""), ein GSM-, GPRS- Modem (73'), ein UMTS-Modem und/oder ein Satelliten-Kommunkations-Modem (73") enthält, steuert und/oder deren Signale mit geeigneten Elementen aufnehmen und verarbeiten kann.

11. Vorrichtung nach einem der vorhergehenden Ansprüche, **dadurch gekennzeichnet, dass** sie Antennen (76"") und weitere Elemente und Vorrichtungen enthält und/oder steuert, zum Empfang und/oder Senden per Satellitenradio-Kommunikation, insbesondere auch zum Empfang und Verarbeiten von aktuellen Warnungen oder wichtiger Informationen und zum senden von Notrufen über Kommunikationsfrequenzen, ggf. auch über Radiofrequenzen.

12. Vorrichtung nach einem der vorhergehenden Ansprüche, **dadurch gekennzeichnet, dass** sie Elemente und Vorrichtungen (65, 76', 66, 76", 73', 76'", 73", 76) enthält oder steuert, zum Empfangen und/oder Versenden von Notruf-Signalen, von regionalen Informationen und/oder zur Ermittlung eigener Standortpositionen und deren Weitergabe, wobei die Signale, Werte und Daten sowohl über GSM, GPRS (73'), UMTS, als auch über Satelliten-Kommunikation (73") beidseitig, GPS (65, 76') und/oder über WLAN (66, 76") abgesetzt und/oder empfangen werden können.

13. Vorrichtung nach einem der vorhergehenden Ansprüche, **dadurch gekennzeichnet, dass** sie als Sicherheitsmodul "SM-1" (2) derart gestaltet und ausgeführt ist, dass sie, vorzugsweise modular aufgebaut ist und in ein Grundgerät, z.B. in ein Mobilteil "MT-1" (1) oder in ein sonstiges Bedienungsgerät für ein Navigations-, Positions-, Ortungs-, Peitungs-, Notruf-, Warn- Informations- und/oder Kommunikationssystems einsetzbar, vorzugsweise einsteckbar, ist.

14. Vorrichtung nach einem der Ansprüche 1 bis 12, **dadurch gekennzeichnet, dass** sie als Sicherheitsmodul "SM" ausgebildet und mit einem Gehäuse (70', 70", 70"', 70"") versehen ist und dass sie als lösbares Zusatzgerät, bzw. als selbständiges Bauteil mit einem Grundgerät, bzw. mit einem Mobilteil "MT" (1', 1", 1 "', 1""), oder mit einem sonstigen Bedienungsgerät für ein Navigations-, Positions-, Ortungs-, Notruf-, Warn- Informations- und/oder Kommunikationssystem, vorzugsweise mechanisch, lösbar verbunden werden kann und mit diesem Bedienungsgerät im Betriebszustand dann eine kompakte Baueinheit, insbesondere als mobile Notruf-, Informations- und/oder Kommunikationseinheit bildet.

15. Vorrichtung nach einem der Ansprüche 1 bis 12, **dadurch gekennzeichnet, dass** sie mit mindestens einem Grundgerät, bzw. mit einem Mobilteil (1, 1', 1", 1'", 1""), als Bedienungsgerät für ein Navigations-, Positions-, Ortungs-, Notruf-, Warn- Informations- und/oder Kommunikationssysteme, mittels Kabel oder drahtlos, verbunden ist, bzw. verbunden werden kann, und mit diesem im Betriebszustand eine lose, ggf. mehrteilige, Baugruppe, vorzugsweise als Mobilteil-Kombination, z.B. (1"") mit (5), bildet.

16. Vorrichtung nach einem der vorhergehenden Ansprüche, **dadurch gekennzeichnet, dass** das Sicherheitsmodul "SM", bzw. 2, 3, 4a, 4b, 5, 6 neben einem Sicherheitsprozessor (61) und einer Sicherheitsschnittstelle 62, einen Energiekontroller (64) und/oder sonstige Elemente und Vorrichtungen enthält oder steuert, zur Kontrolle und Steuerung der Erergieversorgung und zum "Power Management".

17. Vorrichtung nach einem der vorhergehenden Ansprüche, **dadurch gekennzeichnet, dass** das Sicherheitsmodul "SM", bzw. 2, 3, 4a, 4b, 5, 6 Batterien, einen oder mehrere eigene(n) Akku(s) 63 und/oder Anschlüsse für externe Energiezufuhr enthält.

18. Vorrichtung nach einem der vorhergehenden Ansprüche, **dadurch gekennzeichnet, dass** der Sicherheitsprozessor (61) ein "Satelliten - Navigations - Baseband-Microprocessor", insbesondere einen "GPS-Baseband-Microprocessor", bzw. ein GPS/EGNOS-Chip ist und/oder innerhalb eines oder auf einem GPS/EGNOS-Chip-Sets, bzw. eines entsprechenden Microchips, angeordnet ist.

19. Vorrichtung nach einem der vorhergehenden Ansprüche, **dadurch gekennzeichnet, dass** sie einen "Ultra Low Power GPS/EGNOS-Chip-Set", bzw. einen dergl. Microchip enthält.

20. Vorrichtung nach einem der vorhergehenden Ansprüche, **dadurch gekennzeichnet, dass** sie als ergänzendes Bauteil, bzw. als Sicherheitsmodul (2, 3, 4a, 4b, 5) und als zusätzliches Steuergerät zur Navigation, Positionsbestimmung, Ortung, sowie besonders als Notruf-, Warn- Informations- und/oder als ergänzende Kommunikationskomponente, einem Sender und/oder Empfänger, insbesondere einem Mobilteil (1, 1', 1", 1''', 1'''') für Navigations-, Ortungs-, Informations- und/oder Kommunikationssysteme, zugeordnet ist oder bedarfsweise zugeordnet werden kann, wobei dann das Sicherheitsmodul (2) und das Mobilteil (1) eine Geräteeinheit bilden, insbesondere ein Notfallgerät, ein individuelles Informationsgerät und/oder ein universelles Kommunikationsgerät.

21. Vorrichtung nach einem der vorhergehenden Ansprüche, **dadurch gekennzeichnet, dass** sie als Bauteil, bzw. als Sicherheitsmodul (2) in einen Sender und/oder Empfänger, insbesondere in ein Mobilteil (1) oder in ein sonstiges Bedienungsgerät für Navigations-, Positions-, Ortungs-, Notruf-, Warn- Informations- und/oder Kommunikationssysteme eingebaut, vorzugsweise steckbar eingesetzt, ist oder werden kann und dass das Sicherheitsmodul (2) und das Mobilteil (1) eine Geräteeinheit, insbesondere ein Notfallgerät, ein individuelles Informationsgerät und/oder ein universelles Kommunikationsgerät bilden.

22. Vorrichtung nach einem der vorhergehenden Ansprüche, **dadurch gekennzeichnet, dass** sie mindestens einen Satellitenradio-Empfänger 73a und/oder einen Peilsender 73a, 73a' enthält.

23. Mobilteil, oder sonstiges, vorzugsweise mobiles, Bedienungselement, für Navigations-, Positions-, Ortungs-, Notruf-, Warn- Informations- und/oder Kommunikationssysteme, mit einer Vorrichtung nach einem der Ansprüche 1 bis 22, **dadurch gekennzeichnet,**
**dass** das Mobilteil (1, 1', 1", 1'", 1""), eine Vorrichtung und ggf. weitere Bauteile als Sicherheitsmodul (2, 3, 4a, 4b, 5, 6) enthält, die als Zusatzgerät in das Mobilteil (1, 1', 1", 1'", 1""), eingesetzt oder lösbar mit diesem verbunden ist, bzw. sind.

24. Mobilteil oder sonstiges Bedienungsgerät für Navigations-, Positions-, Ortungs-, Notruf-, Warn- Informations- und/oder Kommunikationssysteme aller Art, mit einer Vorrichtung nach einem der Ansprüche 1 bis 22, **dadurch gekennzeichnet,**
**dass** es eine Vorrichtung aufweist oder mit einer solchen verbindbar ist, die als Sicherheitsmodul (2, 3, 4a, 4b, 5, 6) ausgebildet ist und mindesten einen Sicherheitsprozessor (61) und eine implementierte Sicherheitsschnittstelle (62) aufweist, womit die sicherheitsrelevanten Komponenten und Funktionen mindestens aktiviert, kontrolliert und gesteuert werden können.

25. Mobilteil nach einem der Ansprüche 23 und 24, **dadurch gekennzeichnet,**
**dass** es selbst und das hiermit verbindbare Sicherheitsmodul (2, 3, 4a, 4b, 5), bzw. das dieses enthaltende Zusatzgerät, Mittel aufweisen, zur nachträglichen Verbindung beider Geräte miteinander.

26. Mobilteil nach einem der Ansprüche 23 bis 25, **dadurch gekennzeichnet, dass** das Sicherheitsmodul (2), bzw. das Zusatzgerät im Mobilteil (1) integriert angeordnet und bedarfsweise lösbar mit diesem verbunden ist.

27. Mobilteil nach einem der Ansprüche 23 bis 25, **dadurch gekennzeichnet, dass** es als Bedienungsgerät für Navigations-, Positions-, Ortungs-, Notruf-, Warn- Informations- und/oder Kommunikationssysteme ausgebildet ist und dass das Sicherheitsmodul (5), bzw. das Zusatzgerät mit dem Mobilteil (1""), drahtlos, vorzugsweise durch Funk, Ultraschall oder durch Infrarot, oder mittels Kabel, miteinander verbunden sind.

28. Mobilteil nach einem der Ansprüche 23 bis 25, **dadurch gekennzeichnet,**
**dass** das Sicherheitsmodul (2, 3, 4a, 4b, 5, 6), als Zusatzgerät ausgebildet ist und die relevanten Notruf-Elemente und ggf. weitere Bauteile enthält,
**dass** das Mobilteil (1, 1', 1", 1'", 1"") als Grundgerät ein PDA, ein Pocket PC, ein Smart Phone oder ein Mobiltelephon, bzw. Handy ist
und **dass** beide Geräte lösbar oder starr miteinander verbunden, bzw. verbindbar sind, zu einem einheitlichen Bedienungsgerät für ein Sicherheitssystem, bzw. für ein Navigations-, Positions-, Ortungs-, Notruf-, Warn- Informations- und/oder Kommunikationssystem.

29. Mobilteil nach einem der Ansprüche 23 bis 28, **dadurch gekennzeichnet,**
**dass** das Sicherheitsmodul (2, 3, 4a, 4b, 5, 6), als Zusatzgerät ausgebildet ist und die relevanten Notruf-Elemente und ggf. weitere Bauteile enthält,
**dass** dar Sender und/oder Empfänger als Grundgerät ein stationärer PC oder ein mobiler Laptop ist
und **dass** beide Geräte lösbar oder starr miteinander verbunden, bzw. verbindbar sind, zu einem einheitlichen Bedienungsgerät für ein Sicherheitssystem, bzw- für ein Navigations-, Positions-, Ortungs-, Notruf-, Warn- Informations- und/oder Kommunikationssystem.
